# EUROPEAN PATENT APPLICATION

(11) **EP 4 542 095 A1**
(43) Date of publication of application: **23.04.2025**
(21) Application number: 24206897.1
(22) Date of filing: 16.10.2024
(51) Int. Cl.: F16K 24/06, F16K 37/00

(54) **VENTILATION CHECK VALVE**

(30) Priority: 18.10.2023 IT 202300021681
(71) Applicant: Mut Meccanica Tovo S.p.A., 36075 Montecchio Maggiore (VI) (IT)
(72) Inventor: TOVO, Andrea, 36075 MONTECCHIO MAGGIORE (VI) (IT)
(74) Representative: Marchioro, Paolo

(57) **Abstract**

A vacuum breaker valve (10), comprising:
- an internally hollow valve body (20) having a longitudinal extension direction (X);
- a shutter (40) placed inside this valve body (20) and configured to move along the longitudinal extension direction (X) between an open position and a closed position;
- a signalling element (41) operatively associated with the shutter (40) so that said signalling element (41) protrudes from the valve body (20) through an opening (27) defined in the valve body (20), when this shutter (40) is in the closed position, and so that such signalling element (41) is at least partially arranged inside the valve body (20) when the shutter (40) is in the open position.

## Description

The invention concerns a vacuum breaker valve.

The invention also relates to an antifreeze valve assembly comprising the aforesaid vacuum breaker valve.

Nowadays, they are known vacuum breaker valves that are able to let a fluid, in particular air from the outside environment, enter a duct, in particular a duct of an antifreeze valve assembly, when in the aforesaid duct there is a lower pressure than in the outside environment.

In the case of the antifreeze valve assembly, this occurs when the thermostatic cartridge opens to let the fluid be released inside the circuit in order to prevent the formation of ice in the circuit. In this case, a vacuum is formed inside the duct, preventing the fluid from escaping. Therefore, a vacuum breaker valve is needed to let air from the outside environment enter the duct when such a vacuum builds up, so as to rebalance the pressure between the inside of the duct and the outside environment, and let the fluid escape.

Such a vacuum breaker valve of the known type comprises:
- a valve body with an inlet opening for external air and an outlet opening connected to a main duct of a hydraulic circuit;
- a shutter placed inside the valve body and configured to let outside air enter the valve body, and subsequently the main duct of the hydraulic circuit, when the fluid within the main duct is at a lower pressure than the outside air.

A known antifreeze valve assembly comprises:
- a main duct connected to a hydraulic circuit, typically a heat pump circuit;
- a thermostatic cartridge configured to be connected to the main duct, inside which there is a fluid temperature sensor whose function is to open a passage to let the fluid within the main duct flow outside in the event that its temperature reaches a minimum threshold temperature;
- a vacuum breaker valve of the known type as described-above;
- a possible shut-off tap adapted to close the passage of the fluid from the main duct to the thermostatic cartridge in case this cartridge needs to be replaced.

Such a vacuum breaker valve, although well known and appreciated, has an important drawback in that it is not possible to understand from the outside whether the valve is open or closed.

In particular, a user cannot understand whether the valve shutter is in the open or closed position.

Therefore, disadvantageously, a user cannot know from the outside whether the original fluid is inside the duct or whether a disturbance has occurred to the pressurised state of that fluid and the fluid present outside (typically air) has entered the duct via the vacuum breaker valve.

In the case of the aforesaid antifreeze valve assembly according to the prior art, a user can only try to check whether there are any traces of liquid on the floor below the thermostatic cartridge, but this method may be ineffective as the liquid may have evaporated without leaving any traces.

Therefore, disadvantageously, a user can hardly know from the outside whether the original fluid, typically water, is in the circuit, typically a heat pump circuit, or whether the vacuum-breaker valve has opened and there is air inside that circuit.

The task of the present invention is to develop a vacuum breaker valve capable of obviating the aforementioned drawbacks and limitations of the prior art.

In particular, the object of the present invention is to manufacture a vacuum breaker valve that allows the user from the outside to understand whether the valve is open or closed.

Specifically, the object of the invention is to develop a vacuum breaker valve that allows the user to understand whether the shutter is in the open or closed position.

The above-mentioned task and objects are achieved by a vacuum breaker valve according to claim 1.

Further characteristics of the vacuum breaker valve according to claim 1 are described in the dependent claims.

The task and the aforesaid objects, together with the advantages that will be mentioned hereinafter, are indicated by the description of an embodiment of the invention, which is given by way of non-limiting example with reference to the attached drawings, where:
- Figure 1 represents a perspective view of a vacuum breaker valve according to the invention;
- Figure 2 represents a cross-section front view of the vacuum breaker valve of Figure 1 in a first operating configuration;
- Figure 3 represents a cross-section front view of the vacuum breaker valve of Figure 1 in a second operating configuration.

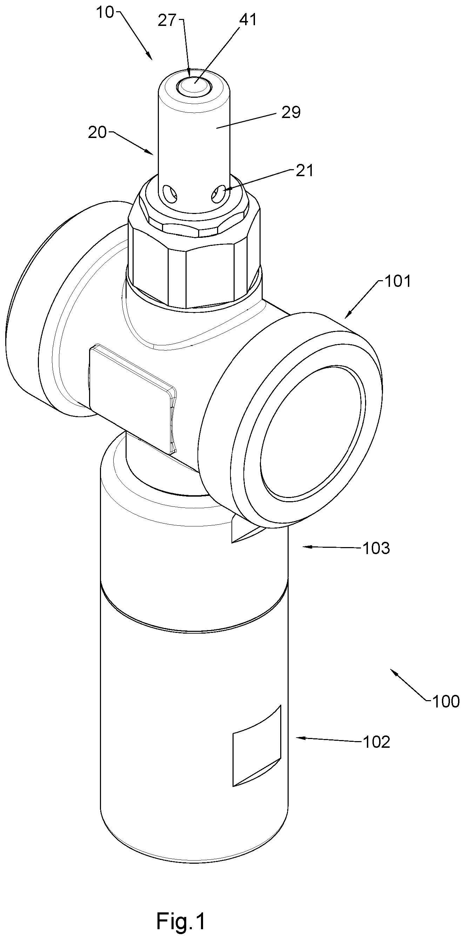

With reference to the above-mentioned figures, a vacuum breaker valve according to the invention is shown as a whole with the number **10** and is clearly visible in Figures 1, 2 and 3.

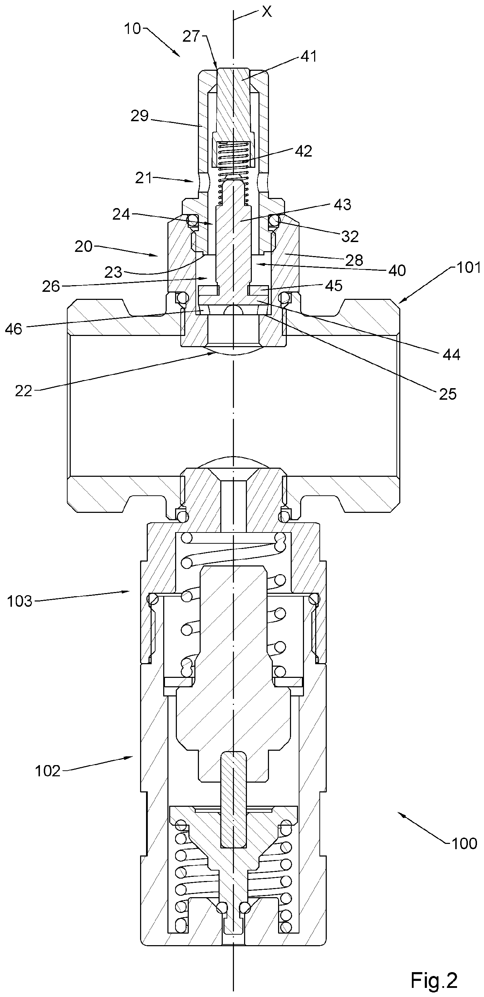

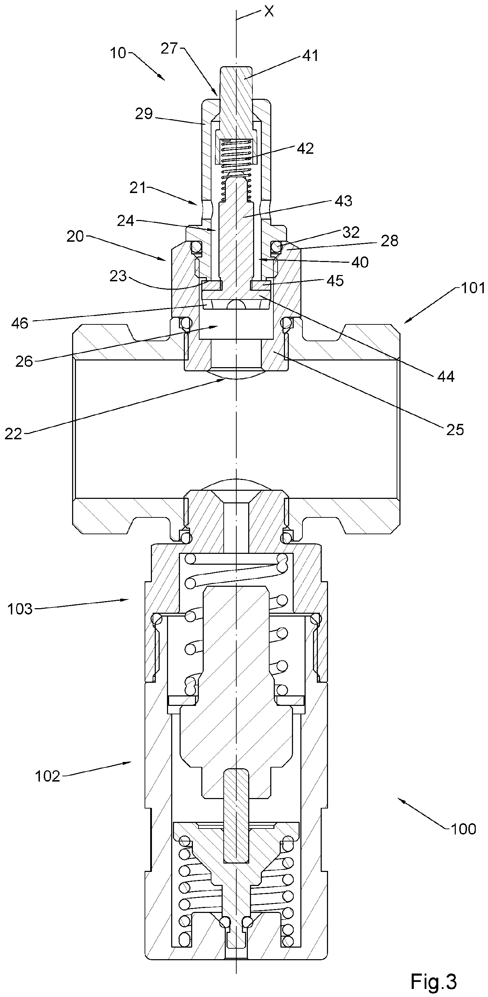

Such a vacuum breaker valve **10** comprises:
- an internally hollow valve body **20** having a longitudinal extension direction **X**, said valve body **20** comprising an inlet port **21** defined along a first portion thereof and an outlet port **22** defined at a first end thereof; the aforesaid valve body **20** is configured to be connected to a main duct **101** of a hydraulic circuit at the outlet port **22;**
- a shutter **40** placed inside the valve body **20** and configured to move along the longitudinal extension direction **X** between an open position, visible in Figure 2, according to which a first fluid is adapted to flow between the inlet port **21** and the outlet port **22,** and a closed position, visible in Figure 3, according to which this flow is prevented.

Said valve body **20** comprises a first inner abutment surface **23** defined between the inlet port **21** and at least a first portion of the shutter **40** and this inner surface **23** is configured to block the movement of the shutter **40** to the closed position when a second fluid from the outlet port **22** is at a higher pressure than the first fluid from the inlet port **21,** so that the coupling between the shutter **40** and the aforesaid first inner surface **23** prevents the first fluid from flowing between the inlet port **21** and the outlet port **22.**

The peculiarity of the aforesaid vacuum breaker valve **10** according to the invention lies in comprising a signalling element **41** operatively associated with the shutter **40** so that the signalling element **41** protrudes from the valve body **20** through an opening **27** defined in said valve body **20,** when the shutter **40** is in the closed position, visible in Figure 3, and so that the aforesaid signalling element **41** is at least partially arranged inside the valve body **20** when this shutter **40** is in the open position, visible in Figure 2.

This vacuum breaker valve **10** advantageously allows a user to understand whether this valve is open or closed.

In particular, this configuration allows an external user to understand whether the shutter is in the open or closed position.

In the present embodiment, the signalling element **41** is associated by means of elastic means **42** to the shutter **40.** Preferably, these elastic means **42** are a spring.

However, it is not excluded that the signalling element **41** may be fixedly associated with said shutter **40.**

In relation to the first portion of said shutter **40,** it comprises a disc **44** arranged transversally to the longitudinal extension direction **X** so that the aforesaid disc **44** is adapted to move along that longitudinal extension direction **X** between the first inner surface **23** and the outlet port **22**; moreover, this shutter **40** comprises a rod **43** arranged along the longitudinal extension direction **X** and configured to be operatively associated with the signalling element **41.**

In the present embodiment, the disc **44** is orthogonal to the rod **43.** In addition, the association between the rod **43** and the signalling element **41** occurs via the aforesaid elastic means **42.**

Such a configuration prevents a user from unintentionally moving the shutter **40** away from the closed position; in fact, the presence of the elastic means **42** allows the shutter **40** to remain in the closed position in the event of an unintentional movement of the signalling element **41.** More precisely, an unintentional movement of the signalling element **41** only causes a deformation of the elastic means **42**, advantageously allowing the shutter **40** to remain in the closed position. Unintentional movement is understood to be a movement of the signalling element **41** which is not due to a change in the pressure state of the fluid contained in the main duct **101**, but a movement due, for example, to the touch of an external user.

In the present embodiment, the valve body **20** comprises an inlet duct **24**, defined between the inlet port **21** and the first inner surface **23**, configured to allow the flow of the first fluid from the inlet port **21** to the outlet port **22.** Moreover, the aforementioned rod **43** has an outer diameter smaller than the inner diameter of the cavity of the valve body **20**, and furthermore the rod **43** is arranged in such a way as to define the aforementioned inlet duct **24.**

In addition, the valve body **20** comprises an outlet chamber **26** defined between the first inner surface **23** and the outlet port **22**, this outlet chamber **26** being configured to at least partially house the shutter **40** and to allow the flow of the first fluid from the inlet duct **24** to the outlet port **22.** In particular, this outlet chamber is configured to house the disc **44.**

It is also necessary to point out that the vacuum breaker valve **10** comprises a first gasket **45** placed between the shutter **40** and the first inner surface **23** adapted to interpose itself between this shutter **40** and this first inner surface **23** in the closed position.

This configuration advantageously allows a watertight sealing of the device in the closed position.

In the embodiment of the invention described herein, by way of example and not limitation of the invention itself, the vacuum breaker valve **10** comprises a second inner abutment surface **25** placed between the shutter **40** and the outlet port **22** and configured to block the movement of said shutter **40** to the open position when that first fluid coming from the inlet port **21** is at a higher pressure than the second fluid coming from the outlet port **22.**

This configuration allows for a moderate and defined stroke of the shutter **40** between the open position and the closed position.

Moreover, the shutter **40** has on its surface adapted to be facing the second inner surface **25** at least one projection **46** adapted to abut with this second inner surface **25** in the opening position, so as to define at least one passage adapted to allow the flow of the first fluid between the inlet port **21** and the outlet port **22.**

Regarding the valve body **20**, it is defined by a main body **28** comprising the outlet port **22**, and a valve cover **29** comprising the inlet port **21**, which are operatively associated with each other.

In the present embodiment, the main body **28** comprises, in addition to the outlet port **22**, the second inner surface **25** and the outlet chamber **26**; while the valve cover **29** comprises, in addition to the inlet port **21**, the inlet duct **24** and the first inner surface **23.**

This configuration allows to easily assemble and disassemble the vacuum breaker valve **10** according to the invention.

In addition, a second gasket **32** is interposed between the main body **28** and the valve cover **29.** This ensures a watertight sealing between the main body **28** and the valve cover **29.**

The invention, as mentioned above, further comprises an antifreeze valve assembly **100** comprising the main duct **101**, a thermostatic cartridge **102** operatively connected to a first portion of the aforesaid main duct **101**, and a vacuum breaker valve **10**, described above, operatively associated with a second portion of that main duct **101.**

In the present embodiment, preferably but not necessarily, the thermostatic cartridge **102** is connected to a first portion of the aforementioned main duct **101** via a shut-off tap **103.** This shut-off tap **103** is adapted to close the passage of the fluid from the main duct **101** to the thermostatic cartridge **102.** Advantageously, this configuration allows the thermostatic cartridge **102** to be easily replaced.

Moreover, the first portion of the aforementioned main duct **101** and the second portion of this main duct **101** are diametrically opposite to each other. In particular, the preferred operating position of the antifreeze valve assembly **100** provides to position the thermostatic cartridge **102** towards the ground, while the vacuum breaker valve **10** is to be positioned upwards. This configuration facilitates the escape of the second fluid from the main duct **101** by gravity.

In practice, it has been proven that the invention achieves the intended task and objects.

Specifically, with the invention, a vacuum breaker valve has been developed that allows a user from the outside to understand whether the valve is open or closed.

Specifically, a vacuum breaker valve has been developed that allows the user to understand whether the shutter is in an open or closed position.

The invention thus conceived is susceptible to numerous modifications and variations, all of which are within the scope of the inventive concept; moreover, all the details may be replaced by other technically equivalent elements.

In practice, the components and materials used, as well as the dimensions and shapes, as long as they are compatible with the specific use, can be any according to requirements and the state of the art.

If the characteristics and techniques mentioned in any claim are followed by reference signs, these reference signs are to be intended for the sole purpose of increasing the intelligibility of the claims and, consequently, such reference signs have no limiting effect on the interpretation of each element identified by way of example by these reference signs.

## Claims

1. A vacuum breaker valve (10), comprising:
- an internally hollow valve body (20) having a longitudinal extension direction (X), said valve body (20) comprising an inlet port (21) defined along a first portion thereof and an outlet port (22) defined at a first end thereof, said valve body (20) being configured to be connected to a main duct (101) of a hydraulic circuit at said outlet port (22);
- a shutter (40) placed inside said valve body (20) and configured to move along said longitudinal extension direction (X) between an open position, according to which a first fluid is adapted to flow between said inlet port (21) and said outlet port (22), and a closed position, according to which said flow is prevented;
said valve body (20) comprising a first inner abutment surface (23) defined between said inlet port (21) and at least a first portion of said shutter (40) and configured to stop the movement of said shutter (40) to said closed position when a second fluid coming from said outlet port (22) is at a higher pressure than said first fluid coming from said inlet port (21), so that the coupling between said shutter (40) and said first inner surface (23) prevents said first fluid from flowing between said inlet port (21) and said outlet port (22), **characterised in that** it comprises a signalling element (41) operatively associated with said shutter (40) in such a way that said signalling element (41) protrudes from said valve body (20) through an opening (27) defined in said valve body (20), when said shutter (40) is in said closed position and in such a way that said signalling element (41) is at least partially arranged inside said valve body (20) when said shutter (40) is in said open position.

2. A vacuum breaker valve (10) according to claim 1, **characterised in that** said signalling element (41) is fixedly associated with said shutter (40).

3. A vacuum breaker valve (10) according to claim 1, **characterised in that** said signalling element (41) is associated by elastic means (42) with said shutter (40).

4. A vacuum breaker valve (10) according to any one of the preceding claims, **characterised in that** said first portion of said shutter (40) comprises a disc (44) arranged transversal to said longitudinal extension direction (X) so that said disc (44) is adapted to move along said longitudinal extension direction (X) between said first inner surface (23) and said outlet port (22), said shutter (40) comprising a rod (43) arranged along said longitudinal extension direction (X) and projecting from said disc (44) and configured to be operatively associated with said signalling element (41).

5. A vacuum breaker valve (10) according to any one of the preceding claims, **characterised in that** said valve body (20) comprises an inlet duct (24) defined between said inlet port (21) and said first inner surface (23) and configured to allow the flow of said first fluid from said inlet port (21) to said outlet port (22).

6. A vacuum breaker valve (10) according to claim 5 in combination with claim 4, **characterised in that** said rod (43) has an outer diameter smaller than the inner diameter of the cavity of said valve body (20), said rod (43) being arranged in such a way as to define said inlet duct (24).

7. A vacuum breaker valve (10) according to claim 5 or 6, **characterised in that** said valve body (20) comprises an outlet chamber (26) defined between said first inner surface (23) and said outlet port (22), said outlet chamber (26) being configured to at least partially house said shutter (40) and to allow the flow of said first fluid from said inlet duct (24) to said outlet port (22).

8. A vacuum breaker valve (10) according to any one of the preceding claims, **characterised in that** it comprises a first gasket (45) placed between said shutter (40) and said first inner surface (23) capable of interposing itself between said shutter (40) and said first inner surface (23) in said closed position.

9. A vacuum breaker valve (10) according to any one of the preceding claims, **characterised in that** it comprises a second inner abutment surface (25) positioned between said shutter (40) and said outlet port (22) and configured to block the movement of said shutter (40) in said opening position when said first fluid coming from said inlet port (21) is at a higher pressure than said second fluid coming from said outlet port (22).

10. A vacuum breaker valve (10) according to claim 9, **characterised in that** said shutter (40) has on its surface facing said second inner surface (25) at least one projection (46) adapted to abut with said second inner surface (25) in said opening position so as to define at least one passage adapted to allow said flow of said first fluid between said inlet port (21) and said outlet port (22).

11. A vacuum breaker valve (10) according to any one of the preceding claims, **characterised in that** said valve body (20) is defined by a main body (28) comprising said outlet port (22) and a valve cover (29) comprising said inlet port (21) operatively associated therewith.

12. A vacuum breaker valve (10) according to claim 11, **characterised in that** a second gasket (32) is interposed between said main body (28) and said valve cover (29).

13. An antifreeze valve assembly (100) comprising a main duct (101) and a thermostatic cartridge (102) operatively connected to a first portion of said main duct (101), **characterised in that** it comprises a vacuum breaker valve (10) according to any one of the preceding claims operatively associated with a second portion of said main duct (101).

14. An antifreeze valve assembly (100) according to claim 13, **characterised in that** said first portion of said main duct (101) and said second portion of said main duct (101) are diametrically opposite to each other.
